# EUROPEAN PATENT SPECIFICATION

(11) **EP 4 433 382 B1**
(45) Date of publication and mention of the grant of the patent: **12.11.2025**
(21) Application number: 22817910.7
(22) Date of filing: 14.11.2022
(51) Int. Cl.: B65D 65/46, B65D 85/804

(54) **CAPSULE FOR THE PREPARATION OF A BEVERAGE, USE OF AND METHOD FOR MANUFACTURING SAID CAPSULE**
KAPSEL ZUR ZUBEREITUNG EINES GETRÄNKS, VERWENDUNG UND VERFAHREN ZUR HERSTELLUNG DER KAPSEL
CAPSULE POUR LA PRÉPARATION D'UNE BOISSON, UTILISATION ET PROCÉDÉ DE FABRICATION DE LADITE CAPSULE

(30) Priority: 15.11.2021 EP 21208126
(43) Date of publication of application: 25.09.2024
(73) Proprietor: Société des Produits Nestlé S.A., 1800 Vevey (CH)
(72) Inventor: ABEGGLEN, Daniel, 1091 Grandvaux (CH); GALAFFU, Nicola, 01210 Ornex (FR)
(74) Representative: Rosolen-Delarue, Katell
(86) International application number: PCT/EP2022/081697
(87) International publication number: WO 2023/084067

(56) References cited:
- EP-A1- 2 210 827
- WO-A1-2017/042290
- WO-A1-2018/042339
- WO-A2-2012/127233

## Description

### Field of the invention

The present invention concerns a capsule for the preparation of a beverage in a beverage preparation device and a method for manufacturing said capsule. The capsule comprises a cup-shaped body made at least partially of cellulose pulp.

### Background of the invention

Containers or capsules made of cellulose pulp are known in the field of beverage preparation devices. Materials made of cellulose pulp are also known which are capable of maintaining the qualities of the beverage substance in the capsule, at least for a certain period of time. Single-use capsules for preparing a beverage in a beverage preparation device are also known.

These cellulose pulp-made single-use capsules provide a potential reduced environmental impact compared to capsules made of other materials.

It is known to attach an oxygen barrier liner on the inner surface of the cup-shaped body made of cellulose pulp.

Known cellulose pulp made capsules are used in beverage preparation devices and comprise a member enclosing the capsule during the beverage preparation process and the injection of water in the capsule for the preparation of the beverage.

In known paper capsules, it happens that when the water injection member pierces the dedicated portion of the cup-shaped body of the capsule, and penetrates the wall made of cellulose pulp, a detachment of the oxygen barrier occurs. This can in some cases block the machine during extraction, or block the capsule inside the beverage preparation device and/or cause an incorrect injection of the water and consequently an incorrect dispensing of the beverage.

Further capsules are known from WO 2012/127233 A2, WO 2017/042290 A1, EP 2 210 827 A1 and WO 2018/042339 A1.

The present invention aims to improve the attachment of the oxygen barrier liner in capsules, made at least partially of cellulose pulp, for the preparation of a beverage in a beverage preparation device.

### Summary of the invention

The invention as claimed in claim 1 is a capsule for the preparation of a beverage in a beverage preparation device, comprising: a cup-shaped body and a cover for closing the cup-shaped body. This cup-shaped body comprises a bottom wall, a lateral wall and an annular flange for the cover to seal thereon. The lateral wall is made at least of a first structural layer and the bottom wall is made at least of a second structural layer.

The cup-shaped body comprises an oxygen barrier liner attached at least to the inner surface of said first structural layer. The oxygen barrier liner comprises at least a polymer, preferably a biopolymer. The bottom wall is suitable for being pierced by a piercing member of the beverage preparation device.

According to the invention, the first structural layer of the lateral wall is made of cellulose pulp, and the second structural layer of the bottom wall comprises: between 0% and 60% of cellulose pulp and between 40% and 100% of a polymer, preferably a biopolymer.

In a preferred embodiment of the invention, the oxygen barrier liner is attached at least to the inner surface of the first structural layer of the lateral wall, and to the inner surface of the second structural layer of the bottom wall.

In a further preferred embodiment of the invention, at least a polymer of the bottom wall is the same as at least a polymer of the oxygen liner, such as to increase the attachment of said oxygen liner to the bottom wall.

Preferably, the second structural layer of the bottom wall is 100% made of a polymer, preferably a biopolymer, and that, preferably, the oxygen barrier liner is provided only at the inner or outer surfaces of the lateral wall of the cup-shaped body, and that, preferably, the polymer the bottom wall is made has oxygen barrier proprieties.

According to another preferred embodiment, the cup-shaped body comprises a portion connecting the bottom wall and the lateral wall, said connecting portion comprising edges of the bottom wall and the lateral wall, these edges being tightly connected to each other, and preferably comprising one or more of the following features:
- the edges of the bottom wall and the lateral wall comprise end surfaces which are inclined towards the inside of the cup-shaped body, and which contact and abut against each other; and/or
- the edge of the bottom wall comprises a first protruding portion protruding towards the inside of the cup-shaped body and towards the flange, said first protruding portion being shaped and dimensioned to come into contact with an extremal portion of the inner surface of the lateral wall at its edge; and/or
- the lateral wall at its edge surrounds a lower extremal portion of the bottom wall; and/or
- the lateral wall comprises, below its edge, a plurality of through holes and the edge of the bottom wall comprises protruding portions filling said holes.

According to a still preferred aspect of the invention at least the bottom wall comprises through holes for evacuating the vacuum, during the connection of the oxygen barrier liner by thermoforming, to the inner surface of the cup-shaped body.

According to another preferred embodiment, the bottom wall of the capsule comprises one or more of the following polymers:
- a biodegradable polymer selected within the list of: polybutylene succinate (PBSA / bioPBS), polybutylene adipate terephthalate (PBAT), starch, cellulose derivates, polylactic acid (PLA), polyhydroxyalcanoates (PHA), or a combination thereof;
- a biodegradable modified or functionalized polyolefin;
- a polymer selected within the list of: butenediol vinyl alcohol copolymer (BVOH), polyvinyl alcohol (PVOH) or a combination thereof;
- a biodegradable modified or functionalized polyolefin;
- a biodegradable polymer selected within the list of: polybutylene succinate (PBSA), polybutylene adipate terephthalate (PBAT), starch, cellulose derivates, polylactic acid (PLA), polyhydroxyalcanoates (PHA) or a combination thereof.

According to another preferred embodiment the cup-shaped body, its oxygen barrier liner and/or the cover of the capsule are made of home compostable materials.

Preferably but not exclusively, the capsule of the invention is a single use coffee capsule.

According to the invention, the use of a capsule as described before in a beverage preparation device is also disclosed.

The invention also relates to a method for producing a capsule comprising: a cup-shaped body and a cover for closing the cup-shaped body, wherein said cup-shaped body comprises a bottom wall, a lateral wall and an annular flange for the cover to seal thereon, wherein said lateral wall is made at least of a first structural layer and said bottom wall is made at least of a second structural layer and the cup-shaped body comprises an oxygen barrier liner attached to the inner surface of at least said first structural layer of said lateral wall, wherein said oxygen barrier liner comprises at least a polymer, preferably a biopolymer, and wherein the bottom wall is suitable for being pierced by a piercing member of a beverage preparation device. According to the invention the method comprises the steps wherein:
- said at least a first structural layer of the lateral wall is made of cellulose pulp and said lateral wall is preferably made by moulding in a usual mould the dry or wet, preferably wet, cellulose pulp; and
- said at least a second structural layer of the bottom wall is over-moulded or over-injected at an upper edge of said lateral wall.

According to the invention, the method also comprises the steps of:
- making the bottom wall 100% of a polymer, preferably a biopolymer, more preferably a polymer having oxygen barrier proprieties; and
- preferably providing the oxygen barrier liner only at the inner or outer surfaces of the lateral wall of the cup-shaped body.

According to the invention, the method also comprises the steps of:
- making said at least a second structural layer of the bottom wall in a material comprising between 0,1% and 60% of cellulose pulp and between 30% and 100% of a polymer, preferably a biopolymer; and
- providing the oxygen barrier liner at the whole inner surface of the cup-shaped body.

In the context of the invention, the term "cellulose pulp" refers to a pulp comprising cellulose fibres in a percentage ranging from 80% to 100% by weight.

The term "cellulose fibres" refers to fibres having a wood and/or a wood free origin. The fibres, by way of non-limiting examples, are: hard wood cellulose fibres, soft wood cellulose fibres, wheat fibres, corn fibres, bagasse fibres, bamboo fibres, hemp fibres, cotton fibres, other similar vegetable or plant fibres, or a combination thereof.

The bottom wall and the oxygen barrier liner preferably comprise a polymer of fossil or non-fossil origin, or a BioSource polymer.

Preferably, the bottom wall and the oxygen barrier liner preferably comprise at least a common polymer.

The bottom wall, by way of non-limiting examples, comprises one or more of following polymers:
- a biodegradable polymer selected within the list of: polybutylene succinate (PBSA / bioPBS), polybutylene adipate terephthalate (PBAT), starch, cellulose derivates, polylactic acid (PLA), polyhydroxyalcanoates (PHA), or a combination thereof,
- a biodegradable modified or functionalized polyolefin,
- a polymer selected within the list of: butenediol vinyl alcohol copolymer (BVOH), polyvinyl alcohol (PVOH) or a combination thereof,
- a biodegradable modified or functionalized polyolefin,
- a biodegradable polymer selected within the list of: polybutylene succinate (PBSA), polybutylene adipate terephthalate (PBAT), starch, cellulose derivates, polylactic acid (PLA), polyhydroxyalcanoates (PHA) or a combination thereof.

The oxygen barrier liner is made of one layer, preferably several layers.

A preferred multilayer barrier liner comprises a core layer having oxygen and/or moisture barrier properties, surrounded by a sealing layer for sealing said barrier liner **to the** cellulose pulp material.

The oxygen barrier liner, by way of non-limiting examples, comprises one or more of following layers:
- an outermost polymeric layer comprising a biodegradable polymer selected within the list of: polybutylene succinate (PBSA / bioPBS), polybutylene adipate terephthalate (PBAT), starch, cellulose derivates, polylactic acid (PLA), polyhydroxyalcanoates (PHA), or a combination thereof,
- a first tie layer comprising a biodegradable modified or functionalized polyolefin,
- a barrier layer comprising a polymer selected within the list of: butenediol vinyl alcohol copolymer (BVOH), polyvinyl alcohol (PVOH) or a combination thereof,
- a second tie layer comprising a biodegradable modified or functionalized polyolefin,
- an innermost polymeric layer comprising a biodegradable polymer selected within the list of: polybutylene succinate (PBSA), polybutylene adipate terephthalate (PBAT), starch, cellulose derivates, polylactic acid (PLA), polyhydroxyalcanoates (PHA) or a combination thereof.

The cover is made in a known material, preferably it is a polymeric film membrane.

The cover may be flat, i.e., non- formed in a three-dimensional shape.

The cover is sealed onto a sealing layer of the cup-shaped body opening, in order to close it after filling with an ingredient.

Preferably, the barrier to oxygen for both the cover and the cup-shaped body is selected to provide a sufficient shelf life depending on the nature of the beverage ingredients. For coffee, for example, the shelf life expected may be of 12 months.

Preferably, the cup-shaped body, its oxygen barrier liner and/or the cover of the capsule are made of home compostable materials. The capsules according to the invention are normally meant to be recycled in recycling processes that are organized at official recycling facilities according to national regulations (for instance in paper recycling streams, or in general garbage recycling or treatment streams).

However, in case the capsule is placed in nature, in a household compostable waste or in a landfill, said capsules are manufactured with materials that are naturally ready to be degraded by bacteria and in conditions of temperature and humidity that are naturally present in nature. In this way, it is ensured that such capsules will not stay in nature and will naturally disappear within a short period of time (a few weeks in principle) within the conditions defined by home composability standards.

More precisely, home composability is now well defined on a national level and mainly based on international standard EN 13432; therefore, they do not require to be further defined in-depth in the present specification. Materials or products compliant with these standards can be recognized by a conformity mark stating their home composability. Some examples of home composability certifications at a national level include, but are not limited to, the following. The certifier TÜV AUSTRIA BELGIUM offers such a home composability certification scheme, and DIN CERTCO offers a certification for home composability according to the Australian standard AS 5810. Italy has a national standard for composting at ambient temperature, UNI 11183:2006. In November 2015, the French Standard "NF T 51-800 Plastics - Specifications for plastics suitable for home composting" was introduced. This standard is covered in the DIN CERTCO scheme.

The preparation of the beverage is obtained by mixing of the fluid substance with an ingredient contained in the capsule. Preferably, the ingredients are chosen within the list of roast and ground coffee, compacted or not, soluble powder coffee or leaf tea. Dairy ingredients (e.g., milk or creamer) could also be provided, as well as chocolate, fruit juices, soups, vegetable juices, bouillons, smoothies, purees, coulis, creams, chicory, barley, culinary aid, soup ingredient, infant formula or a combination thereof, in powdered soluble form, liquid concentrated form having various viscosities or in gel form.

Most preferably, the beverage ingredients are roast and ground coffee.

The capsule of the invention may typically interact with a beverage and/or food preparation device, such as by being fed with a diluent (e.g., hot, cold or ambient water) in the container; such diluent mixes, or interacts otherwise, with the beverage ingredients. With the expression "mixing of the diluent with the beverage ingredient(s)" it should be intended that all the ingredients contained in the capsule are in a form which is compatible with a generic mixing operation (dissolution, extraction or infusion) with the diluent to obtain the beverage product. Devices of this type are for example those used for the extraction of traditional Nespresso^{®} capsules.

Preferably, the cavity delimited by the capsule body and the cover of the capsule is essentially oxygen-free and the empty space is saturated with an inert gas such as nitrogen, carbon oxide and combinations thereof. Preferably, the capsule has an internal pressure of gas above atmospheric pressure, due to the gas contained in the coffee and emanating in the cavity after sealing, such as carbon oxide and dioxide.

### Brief description of the drawings

Additional features and advantages of the present invention are described in, and will be apparent from, the description of the presently preferred embodiments which are set out below with reference to the drawings in which:
**Figure 1** is a schematic perspective view of a capsule to the present invention;
**Figure 2** is a schematic longitudinal sectional view of the capsule of figure 1;
**Figure 3** is a schematic longitudinal sectional view of a first intermediate body of a capsule according to the invention;
**Figure 4** is a schematic longitudinal sectional view of a second intermediate body of a capsule according to the invention;
**Figure 5** is a schematic enlarged sectional view of the portion of figure 4 indicated by the arrow W, showing a first connection mode between two components of the capsule;
**Figure 6** is a schematic enlarged sectional view similar to figure 5, but showing a second connection mode of the same components shown in figure 3;
**Figure** 7 is a simplified and partial longitudinal sectional view of the capsule of figure 1 when it is enclosed in a capsule enclosing member of a beverage preparation device.

### Detailed description of the invention

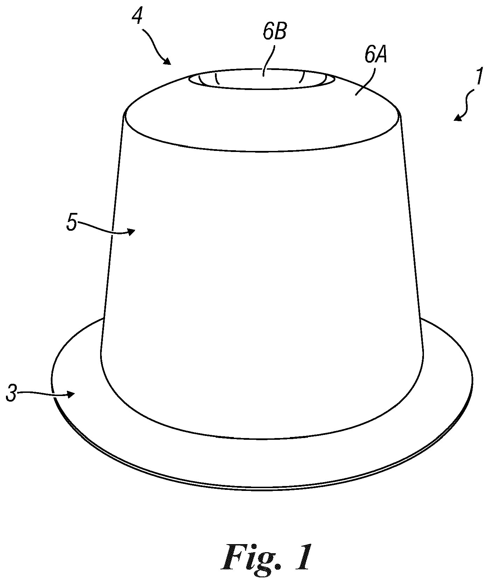

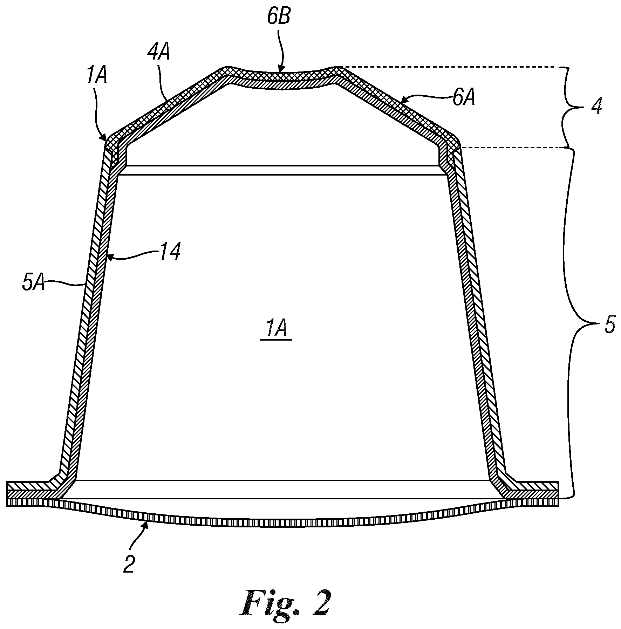

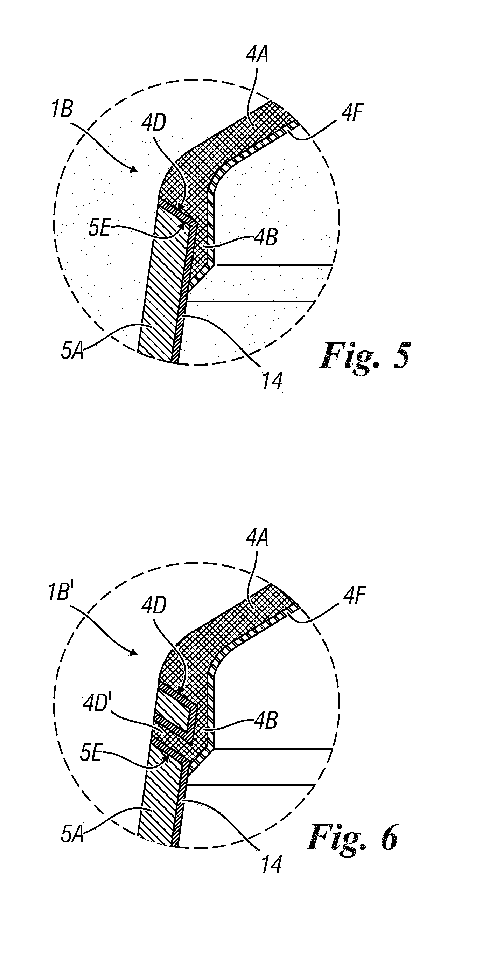

In **figures 1** and 2 it is shown a capsule according to the invention for the preparation of a beverage in a beverage preparation device 10 (schematically shown in **figure 6*****)*** comprising a cup-shaped body 1 and a cover 2 for closing the cup-shaped body 1. The cup-shaped body 1 comprises a bottom wall 4, a lateral wall 5 and an annular flange 3 for the cover 2 to seal thereon.

The lateral wall 5 is made at least of a first structural layer 5A and the bottom wall 4 is made at least of a second structural layer 4A. The cup-shaped body comprises an oxygen barrier liner 14 attached to the inner surface 5C of at least said first structural layer 5A (in **figure 2** the oxygen barrier liner 14 is attached to the inner surface of both the first and second layers 5A and 4A) The oxygen barrier liner 14 comprises at least a polymer, preferably a biopolymer. The bottom wall 4 is suitable for being pierced by a piercing member 12 of the beverage preparation device 10.

According to the invention, the first layer 5A of the lateral wall 5 and the second layer 4A of the bottom wall 4 are made of different materials:
- the first layer 5A of the lateral wall 5 is made of cellulose pulp, and
- the second layer 4A of the bottom wall 4 comprises: between 0% and 60% of cellulose pulp and between 40% and 100% of a polymer, preferably a biopolymer.

Preferably, as shown in **figure 2****,** the oxygen barrier liner 14 is provided at all the inner surfaces of the cup-shaped body 1, such as to delimit at least the entire cavity 1A for housing the beverage substance.

According to an alternative embodiment (not shown) discussed in detail below, the oxygen barrier liner 14 is provided only at the inner or outer surfaces of the lateral wall 5 of the cup-shaped body, and the bottom wall 4 is made in at least a polymer having oxygen barrier proprieties.

In both embodiments a cup-shaped body, having a barrier to oxygen selected to provide a sufficient shelf life depending on the nature of the beverage ingredients, is provided. For coffee, for example, the shelf life expected may be of 12 months.

The cup-shaped body 1 is preferably revolutionary symmetrical.

In the context of the invention, the term "revolutionary symmetrical" refers to a three-dimensional shape not necessarily having a circular cross section nor a constant diameter, but preferably having a frustoconical shape, with more preferably a circular cross section and with an increasing diameter towards the annular flange 3.

Preferably, the lateral wall 5, when seen in a longitudinal section, is inclined with respect to a longitudinal axis of the cup-shaped body 1.

The cup-shaped body comprises a portion 1B connecting the bottom wall 4 and the lateral wall 5. This connecting portion 1D comprises the edges 4D and 5B of the bottom wall 4 and the lateral wall 5, which are tightly connected to each other (tightly meaning that the connection is able to stand the usual pressure created in the capsule by a beverage machine). These edges 4D and 5B are preferably shaped in such a way as to increase a stable and reliable connection between the lateral wall 5 and the bottom walls.

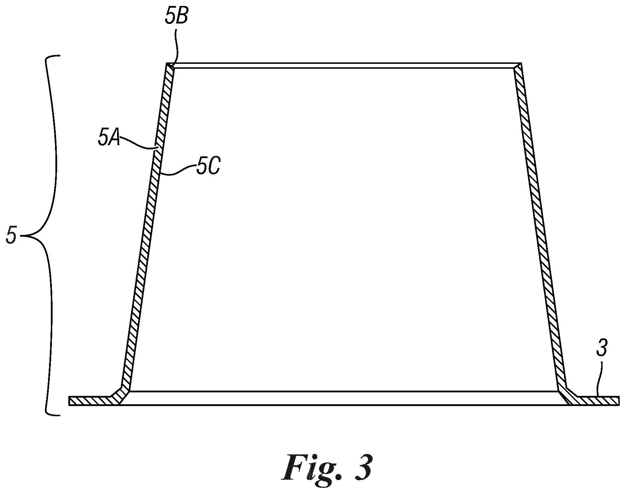

The lateral wall 5 comprises an edge 5B (figure 3), preferably a circular edge, provided with an end surface which is preferably not flat, but inclined towards the inside of the cup-shaped body 1, so as to improve the adhesion of a corresponding edge 4D (figure 5) of the bottom wall 4.

The bottom wall 4 preferably comprises a first inclined wall 6A and a second wall 6B, so as to delimit a shallow concave volume. The first inclined wall 6A preferably has a frustoconical shape, with a circular cross section and with an increasing diameter towards the edge 5B of the lateral wall 5. The second wall 6B is preferably convex (from the point of view of the cavity 1A, i.e., protruding internally towards the cavity 1A) as shown in figure 2, but it can also be flat.

The bottom wall 4 comprises an edge 4D (figure 5) which is shaped and dimensioned in such a way as to come into contact and abut against the corresponding edge 5B of the lateral wall 5. Preferably, the edge 4D is a circular edge, and comprises an end surface which is preferably not flat but inclined towards the inside of the cup-shaped body 1, with an inclination identical to that of the corresponding end surface of the edge 5B of the lateral wall 5.

It should be noted that, in order to increase the attachment of the edges 5B and 4D of the lateral wall 5 and of the bottom wall 4, the end surfaces of these edges 5B and 4D may have other shapes cooperating with each other to increase the hooking of these edges 5B and 4D.

Preferably, the edge 4D of the bottom wall 4 also comprises a first protruding portion 4B which protrudes towards the inside of the cup-shaped body 1 and towards the flange 3 and which is shaped and dimensioned to come into contact with an extremal portion of the internal surface 5C of the lateral wall 5 at its edge 5B. This first protruding portion 4B increases the connection of the bottom wall 4 and the lateral wall 5.

According to this preferred embodiment, an extremal portion of the internal surface 5C of the lateral wall 5 at its edge 5B surrounds the lower extremal portion 4B of the bottom wall 4.

As disclosed in figure 6, to further increase the connection between the bottom wall 4 and the lateral wall 5, the latter may comprise, below its edge 5B, a plurality of through holes 5E, and the edge 4D of the bottom wall 4 has second protruding portions 4D' departing from the first protruding portion 4B and completely filling the holes 5E.

The annular flange 3 comprises a preferably flat wall 3A.

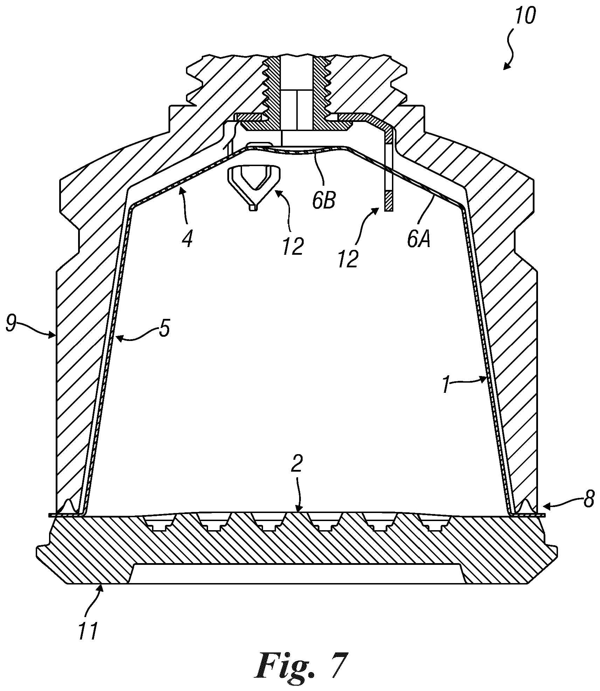

The beverage preparation device 10, partially disclosed in figure 7, comprises a movable enclosing member 9 and a support plate 11 for supporting the cover 2 of the capsule. This support plate 11 tears off the cover 2 and allows the beverage to flow out of the capsule when the liquid injected into the capsule creates a predetermined pressure in the capsule.

As usual for the skilled person, the enclosing member 9 is movable from an initial position (not shown), which allows the introduction of the capsule in the beverage preparation device 10, and a brewing position (shown in figure 7), wherein the enclosing member 9 and the support plate 11 tightly enclose the capsule. In this position pressurized liquid is injected into the capsule through openings formed by one or more pointed elements 12 of the beverage preparation device 10. These pointed elements 12 are designed for piercing the bottom wall 4 of the cup-shaped body 1 and, if it is present, also the oxygen barrier liner 14 (figure 2). The operation of the beverage preparation device 10, as well as the technical features of its various components, are well known to the skilled person and therefore will not be described in detail.

Steps of the method of the invention will now be described in connection with figures 2, 3, 4, 5 and 6.

In a first embodiment of the method according to the invention, the lateral wall 5 is manufactured in a first step.

According to the invention, the lateral wall 5 is made of cellulose pulp and this lateral wall 5 is preferably obtained by moulding the dry or wet, preferably wet, cellulose pulp in a conventional mould. This step is shown in **figure 3****.**

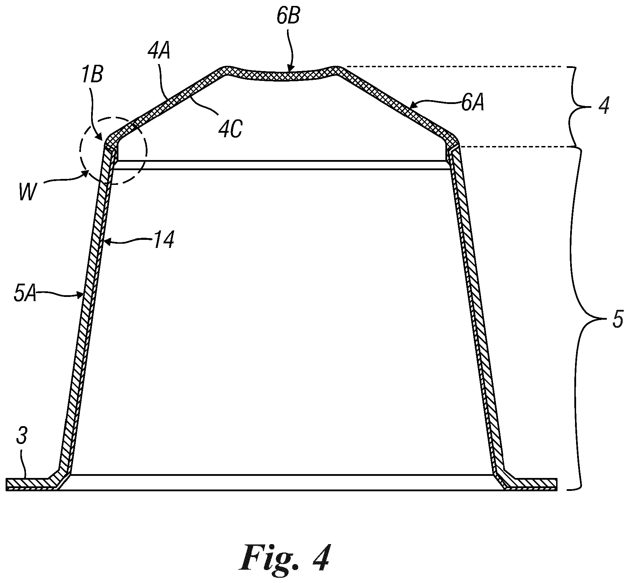

In a subsequent step an oxygen barrier liner 14 is attached to the inner surface 5C of the lateral wall 5 (as shown in **figure 4**). For example, the oxygen liner is laminated to the inner surface 5C of the lateral wall 5, preferably by thermoforming.

In a subsequent step, shown in **figure 4****,** the bottom wall 4 is over-moulded or over-injected at the upper edge 5A of the lateral wall 5, as usual for the skilled person, and in such a way as to obtain the connecting portion 1A, between the edge 5B of the lateral wall 5 and the edge 4D of the bottom wall 4, discussed before.

According to a first embodiment of the invention, the bottom wall 4 is 100% made of a polymer, preferably a biopolymer, also having oxygen barrier features. Therefore, advantageously, the bottom wall 4 must not be provided with an oxygen barrier liner: consequently, when this bottom wall 4 is pierced by the piercing member 12 of a beverage machine 10, there is no risk of a detachment of this liner. It is to be noted that in **figures 5** and **6** it is shown an additional oxygen barrier liner 4F attached to the inner surface 4C of the bottom wall 4, but as stated above this this additional oxygen barrier liner is not essential if the bottom wall is 100% made of a polymer having oxygen barrier features.

It is to be noted that, according to this first mode of the method for manufacturing the cup-shaped body 1, it is not essential that the oxygen barrier liner 14 is attached to the lateral wall 5 before the bottom wall 4 is created over the edge 5B of this lateral wall 5. The oxygen liner may be attached to the inner surface of the lateral wall 5 also after the creation of the bottom wall 4. This inner oxygen liner may also be attached only and/or also to the outer surface of the lateral wall 5.

According to a second mode of the method of the invention, in a first step the lateral wall 5 is manufactured as disclosed in the first mode, that means by moulding in a usual mould a dry or wet, preferably wet, cellulose pulp. Unlike the previous mode an oxygen barrier is not immediately attached to this lateral wall 5 and/or only to this lateral wall 5.

In a subsequent step the bottom wall 4 is over-moulded or over-injected at the upper edge 5A of the lateral wall 5, as usual for the skilled person, and in such a way as to obtain the connecting portion 1A, between the edge 5B of the lateral wall 5 and the edge 4D of the bottom wall 4, discussed before.

According to this second method mode the bottom wall 4 comprises between 0,1% and 60% of cellulose pulp and between 30% and 100% of a polymer, preferably a biopolymer.

In a further step of this second method mode an oxygen barrier liner 14, 4F (fig. 5) is attached to the inner surfaces of both the lateral wall 5 and the bottom wall 4.

Preferably, the oxygen liner is thermoformed into the lateral wall 5 and the bottom wall 4. In this case through holes 4E (schematically shown in **figure** 4) are provided in the bottom wall 4, and these holes have the scope of evacuating the vacuum during the oxygen barrier liner 14 thermoforming process.

According to this second method mode, preferably at least a polymer of the bottom wall 4 is the same as at least a polymer of the oxygen liner 4F such as to increase the attachment of the oxygen liner 4F to the bottom wall 4, relative to the attachment that this oxygen liner has when it is attached to a bottom wall 4 which is 100% made of cellulose pulp. This reduces the risk of detachment of the oxygen barrier liner 4F when the bottom liner is pierced by the piercing member 12 of the beverage machine 10.

The bottom wall 4, by way of non-limiting examples, comprises one or more of following polymers:
- a biodegradable polymer selected within the list of: polybutylene succinate (PBSA / bioPBS), polybutylene adipate terephthalate (PBAT), starch, cellulose derivates, polylactic acid (PLA), polyhydroxyalcanoates (PHA), or a combination thereof,
- a biodegradable modified or functionalized polyolefin,
- a polymer selected within the list of: butenediol vinyl alcohol copolymer (BVOH), polyvinyl alcohol (PVOH) or a combination thereof,
- a biodegradable modified or functionalized polyolefin,
- a biodegradable polymer selected within the list of: polybutylene succinate (PBSA), polybutylene adipate terephthalate (PBAT), starch, cellulose derivates, polylactic acid (PLA), polyhydroxyalcanoates (PHA) or a combination thereof.

The oxygen barrier liner 14, 4F is made of one layer, preferably several layers.

A preferred multilayer barrier liner comprises a core layer having oxygen and/or moisture barrier properties, surrounded by a sealing layer for sealing said barrier liner to the cellulose pulp material.

The oxygen barrier liner 14, by way of non-limiting examples, comprises one or more of the following layers:
- an outermost polymeric layer comprising a biodegradable polymer selected within the list of: polybutylene succinate (PBSA / bioPBS), polybutylene adipate terephthalate (PBAT), starch, cellulose derivates, polylactic acid (PLA), polyhydroxyalcanoates (PHA), or a combination thereof,
- a first tie layer comprising a biodegradable modified or functionalized polyolefin,
- a barrier layer comprising a polymer selected within the list of: butenediol vinyl alcohol copolymer (BVOH), polyvinyl alcohol (PVOH) or a combination thereof,
- a second tie layer comprising a biodegradable modified or functionalized polyolefin,
- an innermost polymeric layer comprising a biodegradable polymer selected within the list of: polybutylene succinate (PBSA), polybutylene adipate terephthalate (PBAT), starch, cellulose derivates, polylactic acid (PLA), polyhydroxyalcanoates (PHA) or a combination thereof.

Preferably, the first and outermost polymeric layer has a thickness comprised between 10 µm and 50 µm, and said layer has an elongation at break comprised between 10% and 800%, a melt flow rate (MFR) comprised between 2 and 4 when measured at 150°C during 10 minutes with a pressure of 2.16 kg, and said layer has a melting point temperature comprised below 80°C.

Preferably, the first tie layer has melting point temperature comprised between 180°C and 230°C and a thickness comprised between 1 µm and 12 µm.

Preferably, the barrier layer has a melting point temperature comprised between 180°C and 230°C and a thickness comprised between 1 µm and 15 µm.

Preferably, the second tie layer has a melting point temperature comprised between 180°C and 230°C and a thickness comprised between 1 µm and 10 µm.

Preferably, the innermost polymeric layer has a thickness comprised between 10 µm and 50 µm, and said innermost layer has an elongation at break comprised between 10% and 1000%, a melt flow rate (MFR) comprised between 4 and 10 when measured at 190°C during 10 minutes with a pressure of 2.16 kg, and said layer has a melting point temperature comprised between 110°C and 180°C.

The cover 2 is made in a known material, preferably it is a polymeric film membrane.

The cover 2 may be flat, i.e., non-formed in a three-dimensional shape.

The cover 2 preferably comprises an oxygen barrier layer.

As usual, the cover 2 may take a convex form, i.e., protruding externally with respect to the cavity 1A (as shown in figure 2), if the capsule has an internal pressure of gas above atmospheric pressure.

The cover 2 is sealed onto a sealing layer of the cup-shaped body opening, in order to close it after filling with an ingredient.

Preferably, the barrier to oxygen for both the cover 2 and the cup-shaped body 1 is selected to provide a sufficient shelf life depending on the nature of the beverage ingredients. For coffee, for example, the shelf life expected may be of 12 months.

Preferably, the cup-shaped body 1, its oxygen barrier liner 14 and/or the cover 2 of the capsule are made of home compostable materials. The capsules according to the invention are normally meant to be recycled in recycling processes that are organized at official recycling facilities according to national regulations (for instance in paper recycling streams, or in general garbage recycling or treatment streams). However, in case the capsule is placed in nature, in a household compostable waste or in a landfill, said capsules are designed with materials that are naturally ready to be degraded by bacteria and in conditions of temperature and humidity that are naturally present in nature. In this way, it is ensured that such capsules will not stay in nature and will naturally disappear within a short period of time (a few weeks in principle) within the conditions defined by home composability standards. More precisely, home composability is now well defined on a national level and mainly based on international standard EN 13432; therefore, they do not require to be further defined in-depth in the present specification. Materials or products compliant with these standards can be recognized by a conformity mark stating their home composability. Some examples of home composability certifications at a national level include, but are not limited to, the following. The certifier TÜV AUSTRIA BELGIUM offers such a home composability certification scheme, and DIN CERTCO offers a certification for home composability according to the Australian standard AS 5810. Italy has a national standard for composting at ambient temperature, UNI 11183:2006. In November 2015, the French Standard "NF T 51-800 Plastics - Specifications for plastics suitable for home composting" was introduced. This standard is covered in the DIN CERTCO scheme.

It should be understood that various changes and modifications to the presently preferred embodiments of the capsules described herein will be apparent to those skilled in the art. Such changes and modifications can be made without departing from the scope of the present invention covered by the appended claims. For example, the connecting portion 1A of the cup-shaped body 1 may have a different shape and/or the end portions which are connected together, of the bottom wall 4 and the lateral wall 5, may have a greater or smaller length and/or thickness or shape than that shown in the previously discussed embodiments.

## Claims

1. A capsule for the preparation of a beverage in a beverage preparation device (10) comprising: a cup-shaped body (1) and a cover (2) for closing the cup-shaped body (1), wherein said cup-shaped body (1) comprises a bottom wall (4), a lateral wall (5) and an annular flange (3) for the cover (2) to seal thereon; wherein said lateral wall (5) is made at least of a first structural layer (5A) and said bottom wall (4) is made at least of a second structural layer (4A) and the cup-shaped body (1) comprises an oxygen barrier liner (14) attached to the inner surface (5C) of at least said first structural layer (5A) of said lateral wall (5), wherein said oxygen barrier liner (14) comprises at least a polymer, preferably a biopolymer; and wherein the bottom wall (4) is suitable for being pierced by a piercing member (12) of the beverage preparation device (10);
**characterized in that:**
- the first structural layer (5A) of the lateral wall (5) is made of cellulose pulp; and
- the second structural layer (4A) of the bottom wall (4) comprises: between 0% and 60% of cellulose pulp and between 40% and 100% of a polymer, preferably a biopolymer.

2. The capsule according to claim 1, wherein the oxygen barrier liner (14) is attached at least to the inner surface (5C) of the first structural layer (5A) of the lateral wall (5), and to the inner surface (4C) of the second structural layer (4A) of the bottom wall (4).

3. The capsule according to any of the preceding claims, wherein at least a polymer of the bottom wall (4) is the same as at least a polymer of the oxygen liner (14), such as to increase the attachment of said oxygen liner (14) to the bottom wall (4).

4. The capsule according to claim 3, wherein the second structural layer (4A) of the bottom wall (4) is 100% made of a polymer, preferably a biopolymer, and that, preferably, the oxygen barrier liner (14) is provided only at the inner or outer surfaces of the lateral wall (5) of the cup-shaped body (1), and that, preferably, the polymer the bottom wall (4) is made has oxygen barrier proprieties.

5. The capsule according to any of the preceding claims, wherein the cup-shaped body (1) comprises a portion (1B) connecting the bottom wall (4) and the lateral wall (5), said connecting portion (1D) comprising edges (4D, 5B) of the bottom wall (4) and the lateral wall (5), these edges (4D, 5B) being tightly connected to each other, and preferably comprising one or more of the following features:
- the edges (4D, 5B) of the bottom wall (4) and the lateral wall (5) comprise end surfaces which are inclined towards the inside of the cup-shaped body (1), and which contact and abut against each other; and/or
- the edge (4D) of the bottom wall (4) comprises a first protruding portion (4B) protruding towards the inside of the cup-shaped body (1) and towards the flange (3), said first protruding portion (4B) being shaped and dimensioned to come into contact with an extremal portion of the inner surface (5C) of the lateral wall (5) at its edge (5B); and/or
- the lateral wall (5) at its edge (5B) surrounds a lower extremal portion (4B) of the bottom wall (4); and/or
- the lateral wall (5) comprises, below its edge (5B), a plurality of through holes (5E) and the edge (4D) of the bottom wall (4) comprises protruding portions (4D) filling said holes (5E).

6. The capsule according to any of the preceding claims, wherein at least the bottom wall (4) comprises through holes (4E) for evacuating the vacuum, during the connection of the oxygen barrier liner (14) by thermoforming, to the inner surface of the cup-shaped body (1).

7. The capsule according to any of the preceding claims, wherein the bottom wall (4) comprises one or more of the following polymers:
- a biodegradable polymer selected within the list of: polybutylene succinate (PBSA / bioPBS), polybutylene adipate terephthalate (PBAT), starch, cellulose derivates, polylactic acid (PLA), polyhydroxyalcanoates (PHA), or a combination thereof;
- a biodegradable modified or functionalized polyolefin;
- a polymer selected within the list of: butenediol vinyl alcohol copolymer (BVOH), polyvinyl alcohol (PVOH) or a combination thereof;
- a biodegradable modified or functionalized polyolefin;
- a biodegradable polymer selected within the list of: polybutylene succinate (PBSA), polybutylene adipate terephthalate (PBAT), starch, cellulose derivates, polylactic acid (PLA), polyhydroxyalcanoates (PHA) or a combination thereof.

8. The capsule according to any of the preceding claims, wherein the cup-shaped body (1), its oxygen barrier liner (14) and/or the cover (2) of the capsule are made of home compostable materials.

9. The capsule according to any claims 1 to 8, wherein said capsule is a single use coffee capsule.

10. Use of a capsule according to any claims 1 to 9 in a beverage preparation device (10).

11. A method for producing a capsule according to one or more of the preceding claims 1 to 8, wherein said capsule comprises: a cup-shaped body (1) and a cover (2) for closing the cup-shaped body (1), wherein said cup-shaped body (1) comprises a bottom wall (4), a lateral wall (5) and an annular flange (3) for the cover (2) to seal thereon, wherein said lateral wall (5) is made at least of a first structural layer (5A) and said bottom wall (4) is made at least of a second structural layer (4A) and the cup-shaped body (1) comprises an oxygen barrier liner (14) attached to the inner surface (5C) of at least said first structural layer (5A) of said lateral wall (5), wherein said oxygen barrier liner (14) comprises at least a polymer, preferably a biopolymer, and wherein the bottom wall (4) is suitable for being pierced by a piercing member (12) of a beverage preparation device (10),
**characterized in that** it further comprises the steps wherein:
- said at least a first structural layer (5A) of the lateral wall (5) is made of cellulose pulp and said lateral wall (5) is preferably made by moulding in a usual mould the dry or wet, preferably wet, cellulose pulp; and
- said at least a second structural layer (4A) of the bottom wall (4) is over-moulded or over-injected at an upper edge (5A) of said lateral wall (5).

12. The method according to claim 11, which further comprises the steps of:
- making the bottom wall (4) 100% of a polymer, preferably a biopolymer, more preferably a polymer having oxygen barrier proprieties; and
- preferably providing the oxygen barrier liner (14) only at the inner or outer surfaces of the lateral wall (5) of the cup-shaped body (1).

13. The method according to claim 11, **characterized by**:
- making said at least a second structural layer (4A) of the bottom wall (4) in a material comprising between 0,1% and 60% of cellulose pulp and between 30% and 100% of a polymer, preferably a biopolymer; and
- providing the oxygen barrier liner (14) at the whole inner surface of the cup-shaped body (1).

14. The method according to claim 11, **characterized in that** the oxygen barrier liner (14) is thermoformed at least to the inner surface (5C) of the lateral wall (5) of the cup-shaped body (1).

## Patentansprüche

1. Kapsel für die Zubereitung eines Getränks in einer Getränkezubereitungsvorrichtung (10), umfassend: einen becherförmigen Körper (1) und eine Abdeckung (2) zum Verschließen des becherförmigen Körpers (1), wobei der becherförmige Körper (1) eine Bodenwand (4), eine Seitenwand (5) und einen ringförmigen Flansch (3) zum Abdichten der Abdeckung (2) daran umfasst; wobei die Seitenwand (5) mindestens aus einer ersten Strukturschicht (5A) hergestellt ist und die Bodenwand (4) mindestens aus einer zweiten Strukturschicht (4A) hergestellt ist und der becherförmige Körper (1) eine Sauerstoffbarriereauskleidung (14) umfasst, die an der Innenoberfläche (5C) mindestens der ersten Strukturschicht (5A) der Seitenwand (5) angebracht ist, wobei die Sauerstoffbarriereauskleidung (14) mindestens ein Polymer, vorzugsweise ein Biopolymer, umfasst; und wobei die Bodenwand (4) geeignet ist, um durch ein Durchstechelement (12) der Getränkezubereitungsvorrichtung (10) durchstochen zu werden;
**dadurch gekennzeichnet, dass:**
- die erste Strukturschicht (5A) der Seitenwand (5) aus Zellulosepulpe hergestellt ist; und
- die zweite Strukturschicht (4A) der Bodenwand (4) umfasst: zu zwischen 0 % und 60 % Zellulosepulpe und zu zwischen 40 % und 100 % ein Polymer, vorzugsweise ein Biopolymer.

2. Kapsel nach Anspruch 1, wobei die Sauerstoffbarriereauskleidung (14) mindestens an der Innenoberfläche (5C) der ersten Strukturschicht (5A) der Seitenwand (5) und an der Innenoberfläche (4C) der zweiten Strukturschicht (4A) der Bodenwand (4) angebracht ist.

3. Kapsel nach einem der vorstehenden Ansprüche, wobei mindestens ein Polymer der Bodenwand (4) dasselbe ist wie mindestens ein Polymer der Sauerstoffauskleidung (14), um so die Anbringung der Sauerstoffauskleidung (14) an der Bodenwand (4) zu verbessern.

4. Kapsel nach Anspruch 3, wobei die zweite Strukturschicht (4A) der Bodenwand (4) vollständig aus einem Polymer, vorzugsweise einem Biopolymer, hergestellt ist und die Sauerstoffbarriereauskleidung (14) vorzugsweise nur an der Innen- oder Außenoberfläche der Seitenwand (5) des becherförmigen Körpers (1) bereitgestellt ist und das Polymer, aus dem die Bodenwand (4) hergestellt ist, vorzugsweise Sauerstoffbarriereeigenschaften aufweist.

5. Kapsel nach einem der vorstehenden Ansprüche, wobei der becherförmige Körper (1) einen Abschnitt (1B) umfasst, der die Bodenwand (4) und die Seitenwand (5) verbindet, der Verbindungsabschnitt (1D) umfassend Kanten (4D, 5B) der Bodenwand (4) und der Seitenwand (5), wobei diese Kanten (4D, 5B) fest miteinander verbunden sind, und vorzugsweise umfassend ein oder mehrere der folgenden Merkmale:
- die Kanten (4D, 5B) der Bodenwand (4) und der Seitenwand (5) umfassen Endoberflächen, die zu der Innenseite des becherförmigen Körpers (1) hin geneigt sind und die einander berühren und aneinander anliegen; und/oder
- die Kante (4D) der Bodenwand (4) umfasst einen ersten hervorstehenden Abschnitt (4B), der zu der Innenseite des becherförmigen Körpers (1) hin und zu dem Flansch (3) hin vorsteht, wobei der erste hervorstehende Abschnitt (4B) geformt und bemessen ist, um mit einem äußersten Abschnitt der Innenoberfläche (5C) der Seitenwand (5) an ihrer Kante (5B) in Berührung zu kommen; und/oder
- die Seitenwand (5) umgibt an ihrer Kante (5B) einen unteren äußersten Abschnitt (4B) der Bodenwand (4); und/oder
- die Seitenwand (5) umfasst unterhalb ihrer Kante (5B) eine Vielzahl von Durchgangslöchern (5E) und die Kante (4D) der Bodenwand (4) umfasst hervorstehende Abschnitte (4D), die die Löcher (5E) ausfüllen.

6. Kapsel nach einem der vorstehenden Ansprüche, wobei mindestens die Bodenwand (4) Durchgangslöcher (4E) zum Evakuieren des Vakuums während der Verbindung der Sauerstoffbarriereauskleidung (14) durch Thermoformen mit der Innenoberfläche des becherförmigen Körpers (1) umfasst.

7. Kapsel nach einem der vorstehenden Ansprüche, wobei die Bodenwand (4) eines oder mehrere der folgenden Polymere umfasst:
- ein biologisch abbaubares Polymer, ausgewählt aus der Liste: Polybutylensuccinat (PBSA/bioPBS), Polybutylenadipatterephthalat (PBAT), Stärke, Cellulosederivate, Polymilchsäure (PLA), Polyhydroxyalcanoate (PHA) oder eine Kombination davon;
- ein biologisch abbaubares modifiziertes oder funktionalisiertes Polyolefin;
- ein Polymer, ausgewählt aus der Liste: Butendiol-Vinylalkohol-Copolymer (BVOH), Polyvinylalkohol (PVOH) oder eine Kombination davon;
- ein biologisch abbaubares modifiziertes oder funktionalisiertes Polyolefin;
- ein biologisch abbaubares Polymer, ausgewählt aus der folgenden Liste: Polybutylensuccinat (PBSA), Polybutylenadipatterephthalat (PBAT), Stärke, Cellulosederivate, Polymilchsäure (PLA), Polyhydroxyalcanoate (PHA) oder eine Kombination davon.

8. Kapsel nach einem der vorstehenden Ansprüche, wobei der becherförmige Körper (1), seine Sauerstoffbarriereauskleidung (14) und/oder die Abdeckung (2) der Kapsel aus heimkompostierbaren Materialien hergestellt sind.

9. Kapsel nach einem der Ansprüche 1 bis 8, wobei die Kapsel eine Kaffeekapsel zum einmaligen Gebrauch ist.

10. Verwendung einer Kapsel nach einem der Ansprüche 1 bis 9 in einer Getränkezubereitungsvorrichtung (10).

11. Verfahren zum Produzieren einer Kapsel nach einem oder mehreren der vorstehenden Ansprüche 1 bis 8, wobei die Kapsel umfasst: einen becherförmigen Körper (1) und eine Abdeckung (2) zum Verschließen des becherförmigen Körpers (1), wobei der becherförmige Körper (1) eine Bodenwand (4), eine Seitenwand (5) und einen ringförmigen Flansch (3) zum Abdichten der Abdeckung (2) daran umfasst, wobei die Seitenwand (5) mindestens aus einer ersten Strukturschicht (5A) hergestellt ist und die Bodenwand (4) mindestens aus einer zweiten Strukturschicht (4A) hergestellt ist und der becherförmige Körper (1) eine Sauerstoffbarriereauskleidung (14) umfasst, die an der Innenoberfläche (5C) mindestens der ersten Strukturschicht (5A) der Seitenwand (5) angebracht ist, wobei die Sauerstoffbarriereauskleidung (14) mindestens ein Polymer, vorzugsweise ein Biopolymer, umfasst, und wobei die Bodenwand (4) geeignet ist, um durch ein Durchstechelement (12) der Getränkezubereitungsvorrichtung (10) durchstochen zu werden,
**dadurch gekennzeichnet, dass** es ferner die Schritte umfasst, in denen:
- die mindestens eine erste Strukturschicht (5A) der Seitenwand (5) aus Zellulosepulpe hergestellt ist und die Seitenwand (5) vorzugsweise durch Formen der trockenen oder nassen, vorzugsweise nassen Zellulosepulpe in einer üblichen Form hergestellt wird; und
- die mindestens eine zweite Strukturschicht (4A) der Bodenwand (4) an einer Oberkante (5A) der Seitenwand (5) überformt oder überspritzt ist.

12. Verfahren nach Anspruch 11, das ferner die Schritte umfasst:
- Herstellen der Bodenwand (4) zu 100 % aus einem Polymer, vorzugsweise einem Biopolymer, mehr bevorzugt einem Polymer, das Sauerstoffbarriereeigenschaften aufweist; und
- vorzugsweise Bereitstellen der Sauerstoffbarriereauskleidung (14) nur an der Innen- oder Außenoberfläche der Seitenwand (5) des becherförmigen Körpers (1).

13. Verfahren nach Anspruch 11, **gekennzeichnet durch:**
- Herstellen der mindestens einen zweiten Strukturschicht (4A) der Bodenwand (4) aus einem Material, umfassend zu zwischen 0,1 % und 60 % Zellulosepulpe und zu zwischen 30 % und 100 % ein Polymer, vorzugsweise ein Biopolymer; und
- Bereitstellen der Sauerstoffbarriereauskleidung (14) an der gesamten Innenoberfläche des becherförmigen Körpers (1).

14. Verfahren nach Anspruch 11, **dadurch gekennzeichnet, dass** die Sauerstoffbarriereauskleidung (14) mindestens an die Innenoberfläche (5C) der Seitenwand (5) des becherförmigen Körpers (1) thermogeformt ist.

## Revendications

1. Capsule pour la préparation d'une boisson dans un dispositif de préparation de boisson (10) comprenant : un corps en forme de coupelle (1) et un couvercle (2) permettant de fermer le corps en forme de coupelle (1), dans lequel ledit corps en forme de coupelle (1) comprend une paroi inférieure (4), une paroi latérale (5) et une bride annulaire (3) permettant au couvercle (2) d'assurer l'étanchéité sur celle-ci ; dans laquelle ladite paroi latérale (5) est constituée au moins d'une première couche structurelle (5A) et ladite paroi inférieure (4) est constituée au moins d'une seconde couche structurelle (4A) et le corps en forme de coupelle (1) comprend un revêtement barrière à l'oxygène (14) fixé à la surface interne (5C) d'au moins ladite première couche structurelle (5A) de ladite paroi latérale (5), dans laquelle ledit revêtement barrière à l'oxygène (14) comprend au moins un polymère, de préférence un biopolymère ; et dans lequel la paroi inférieure (4) est apte à être percée par un élément de perçage (12) du dispositif de préparation de boisson (10) ;
**caractérisée en ce que** :
- la première couche structurelle (5A) de la paroi latérale (5) est constituée de pâte à papier ; et
- la seconde couche structurelle (4A) de la paroi inférieure (4) comprend : entre 0 % et 60 % de pâte à papier et entre 40 % et 100 % d'un polymère, de préférence un biopolymère.

2. Capsule selon la revendication 1, dans laquelle le revêtement barrière à l'oxygène (14) est fixé au moins à la surface interne (5C) de la première couche structurelle (5A) de la paroi latérale (5), et à la surface interne (4C) de la seconde couche structurelle (4A) de la paroi inférieure (4).

3. Capsule selon l'une quelconque des revendications précédentes, dans laquelle au moins un polymère de la paroi inférieure (4) est le même qu'au moins un polymère du revêtement anti-oxygène (14), de manière à augmenter la fixation dudit revêtement anti-oxygène (14) à la paroi inférieure (4).

4. Capsule selon la revendication 3, dans laquelle la seconde couche structurelle (4A) de la paroi inférieure (4) est constituée à 100 % d'un polymère, de préférence un biopolymère, et de préférence, le revêtement barrière à l'oxygène (14) est disposé uniquement sur les surfaces interne ou externe de la paroi latérale (5) du corps en forme de coupelle (1), et de préférence, le polymère dont est constituée la paroi inférieure (4) a des propriétés de barrière à l'oxygène.

5. Capsule selon l'une quelconque des revendications précédentes, dans laquelle le corps en forme de coupelle (1) comprend une partie (1B) reliant la paroi inférieure (4) et la paroi latérale (5), ladite partie de liaison (1D) comprenant des bords (4D, 5B) de la paroi inférieure (4) et de la paroi latérale (5), ces bords (4D, 5B) étant étroitement reliés les uns aux autres, et comprenant de préférence une ou plusieurs des caractéristiques suivantes :
- les bords (4D, 5B) de la paroi inférieure (4) et de la paroi latérale (5) comprennent des surfaces d'extrémité qui sont inclinées vers l'intérieur du corps en forme de coupelle (1), et qui sont en contact et en butée l'une sur l'autre ; et/ou
- le bord (4D) de la paroi inférieure (4) comprend une première partie en saillie (4B) faisant saillie vers l'intérieur du corps en forme de coupelle (1) et vers la bride (3), ladite première partie en saillie (4B) étant formée et dimensionnée pour venir en contact avec une partie extrême de la surface interne (5C) de la paroi latérale (5) au niveau de son bord (5B) ; et/ou
- la paroi latérale (5), au niveau de son bord (5B), entoure une partie extrême inférieure (4B) de la paroi inférieure (4) ; et/ou
- la paroi latérale (5) comprend, sous son bord (5B), une pluralité de trous traversants (5E) et le bord (4D) de la paroi inférieure (4) comprend des parties en saillie (4D) remplissant lesdits trous (5E).

6. Capsule selon l'une quelconque des revendications précédentes, dans laquelle au moins la paroi inférieure (4) comprend des trous traversants (4E) permettant d'évacuer le vide, pendant la liaison du revêtement barrière à l'oxygène (14) par thermoformage, à la surface interne du corps en forme de coupelle (1).

7. Capsule selon l'une quelconque des revendications précédentes, dans laquelle la paroi inférieure (4) comprend un ou plusieurs des polymères suivants :
- un polymère biodégradable choisi dans la liste suivante : polybutylène succinate (PBSA/bioPBS), polybutylène adipate téréphtalate (PBAT), amidon, dérivés de cellulose, acide polylactique (PLA), polyhydroxyalcanoates (PHA), ou une combinaison de ceux-ci ;
- une polyoléfine modifiée ou fonctionnalisée biodégradable ;
- un polymère choisi dans la liste suivante : copolymère butènediol-alcool vinylique (BVOH), alcool polyvinylique (PVOH) ou une combinaison de ceux-ci ;
- une polyoléfine modifiée ou fonctionnalisée biodégradable ;
- un polymère biodégradable choisi dans la liste suivante : polybutylène succinate (PBSA), polybutylène adipate téréphtalate (PBAT), amidon, dérivés de cellulose, acide polylactique (PLA), polyhydroxyalcanoates (PHA) ou une combinaison de ceux-ci.

8. Capsule selon l'une quelconque des revendications précédentes, dans laquelle le corps en forme de coupelle (1), son revêtement barrière à l'oxygène (14) et/ou le couvercle (2) de la capsule sont constitués de matériaux compostables à domicile.

9. Capsule selon l'une quelconque des revendications 1 à 8, dans laquelle ladite capsule est une capsule de café à usage unique.

10. Utilisation d'une capsule selon l'une quelconque des revendications 1 à 9 dans un dispositif de préparation de boisson (10).

11. Procédé de fabrication d'une capsule selon l'une ou plusieurs des revendications 1 à 8 précédentes, dans lequel ladite capsule comprend : un corps en forme de coupelle (1) et un couvercle (2) permettant de fermer le corps en forme de coupelle (1), dans lequel ledit corps en forme de coupelle (1) comprend une paroi inférieure (4), une paroi latérale (5) et une bride annulaire (3) permettant au couvercle (2) d'assurer l'étanchéité sur celle-ci, dans lequel ladite paroi latérale (5) est constituée au moins d'une première couche structurelle (5A) et ladite paroi inférieure (4) est constituée au moins d'une seconde couche structurelle (4A) et le corps en forme de coupelle (1) comprend un revêtement barrière à l'oxygène (14) fixé à la surface interne (5C) d'au moins ladite première couche structurelle (5A) de ladite paroi latérale (5), dans lequel ledit revêtement barrière à l'oxygène (14) comprend au moins un polymère, de préférence un biopolymère, et dans lequel la paroi inférieure (4) est apte à être percée par un élément de perçage (12) d'un dispositif de préparation de boisson (10),
**caractérisé en ce qu'**il comprend en outre les étapes dans lesquelles :
- ladite au moins une première couche structurelle (5A) de la paroi latérale (5) est constituée de pâte à papier et ladite paroi latérale (5) est de préférence fabriquée par moulage dans un moule habituel de la pâte à papier sèche ou humide, de préférence humide ; et
- ladite au moins une seconde couche structurelle (4A) de la paroi inférieure (4) est surmoulée ou surinjectée au niveau d'un bord supérieur (5A) de ladite paroi latérale (5).

12. Procédé selon la revendication 11, qui comprend en outre les étapes consistant à :
- réaliser la paroi inférieure (4) à 100 % en un polymère, de préférence un biopolymère, plus préférablement un polymère ayant des propriétés de barrière à l'oxygène ; et
- disposer de préférence le revêtement barrière à l'oxygène (14) uniquement sur les surfaces interne ou externe de la paroi latérale (5) du corps en forme de coupelle (1).

13. Procédé selon la revendication 11, **caractérisé par** :
- la réalisation de ladite au moins une seconde couche structurelle (4A) de la paroi inférieure (4) en un matériau comprenant entre 0,1 % et 60 % de pâte à papier et entre 30 % et 100 % d'un polymère, de préférence un biopolymère ; et
- la disposition du revêtement barrière à l'oxygène (14) sur toute la surface interne du corps en forme de coupelle (1).

14. Procédé selon la revendication 11, **caractérisé en ce que** le revêtement barrière à l'oxygène (14) est thermoformé au moins sur la surface interne (5C) de la paroi latérale (5) du corps en forme de coupelle (1).
